# EUROPÄISCHE PATENTSCHRIFT

(11) **EP 0 999 088 B1**
(45) Veröffentlichungstag und Bekanntmachung des Hinweises auf die Patenterteilung: **05.03.2003**
(21) Anmeldenummer: 99121212.7
(22) Anmeldetag: 23.10.1999
(51) Int. Cl.: B60K 35/00

(54) **Zur Verwendung in einem Kraftfahrzeug vorgesehene Anzeigeeinheit**
Display device for motor vehicle
Dispositif indicateur pour véhicule a moteur

(30) Priorität: 02.11.1998 DE 19850573; 06.05.1999 DE 19920789
(43) Veröffentlichungstag der Anmeldung: 10.05.2000
(73) Patentinhaber: Siemens Aktiengesellschaft, 80333 München (DE)
(72) Erfinder: Rupp, Christoph, 50825 Köln (DE)

(56) Entgegenhaltungen:
- WO-A-98/09842
- DE-A- 19 746 764
- US-A- 5 808 599
- PATENT ABSTRACTS OF JAPAN vol. 1997, no. 03, 31. März 1997 (1997-03-31) -& JP 08 286621 A (YAZAKI CORP), 1. November 1996 (1996-11-01)

## Beschreibung

Die Erfindung betrifft eine zur Verwendung in einem Kraftfahrzeug vorgesehene Anzeigeeinheit mit einem Display gemäß dem Oberbegriff von Anspruch 1, wobei eine Abbildung auf dem Display nur aus einem Blickwinkelbereich sichtbar ist.

Solche Anzeigeeinheiten werden für eine Informationsdarstellung in heutigen Kraftfahrzeugen eingesetzt und sind aus der Praxis bekannt. Die Anzeigeeinheit hat hierbei ein um eine senkrechte Achse in einer Mittelkonsole des Kraftfahrzeuges gelagertes Display. Hierdurch kann man das Display wahlweise auf den Fahrer oder den Beifahrer ausrichten, so daß die Abbildung jeweils nur für den Fahrer oder den Beifahrer sichtbar ist. Auf der Anzeigeeinheit sind beispielsweise Hinweise einer Satellitennavigation oder Fernsehbilder darstellbar.

Nachteilig bei der bekannten Anzeigeeinheit ist, daß das Display aufwendig zu lagern ist und die Anschlußleitungen für das Display schwierig zu verlegen sind. Weiterhin gestaltet sich die Anordnung der Anzeigeeinheit in dem Kraftfahrzeug schwierig, da beispielsweise ein in einer Mittelkonsole montiertes, auf den Beifahrer geschwenktes Display häufig trotzdem aus dem Blickwinkel des Fahrers eingesehen werden kann und der Fahrer dadurch vom Verkehrsgeschehen abgelenkt wird.

Es ist weiterhin auch bekannt, optische Elemente vorzusehen, die beweglich zueinander angeordnet sind und so eine einfache Ablenkung des von dem Display ausgehenden Lichtes erlauben. Deshalb kann ein Fahrer des Kraftfahrzeuges keine Abbildungen auf dem Display erkennen, wenn dieses ausschließlich Licht in Richtung des Beifahrers abstrahlt. Dabei wirkt sich nachteilig aus, daß die Anzeigeeinheit im wesentlichen nur von einer Person genutzt werden kann, was beispielsweise bei einem Display eines Satellitennavigations-Systems als störend empfunden wird, da hierbei sowohl für den Fahrer als auch für den Beifahrer ein Interesse an einer ausreichenden Ablesbarkeit besteht. Weiterhin muß bei flexibel eingesetzten Anzeigeeinheiten, die einerseits der Unterhaltung, andererseits aber auch der Fahrerinformation dienen, jeweils eine manuelle Betätigung des optischen Elementes vorgenommen werden.

Der Erfindung liegt das Problem zugrunde, eine Anzeigeeinheit der eingangs genannten Art so zu gestalten, daß eine Ablenkung des Fahrers bei einer für den Beifahrer vorgesehenen Abbildung zuverlässig verhindert und zugleich eine bedarfsgerechte Bereitstellung von Informationen für den Fahrer ermöglicht wird, ohne daß dieser hierzu die Anzeigeeinheit manuell betätigen muß.

Dieses Problem wird erfindungsgemäß dadurch gelöst, daß mittels des Displays zwei voneinander unabhängige Abbildungen darstellbar sind, wobei mittels eines optischen Elementes die erste Abbildung nur aus dem ersten Blickwinkelbereich und die zweite Abbildung nur aus einem zweiten Blickwinkelbereich sichtbar ist.

Durch die erfindungsgemäße, unabhängige Bereitstellung von unterschiedlichen Abbildungen für den Fahrer und den Beifahrer kann eine jeweils der Betriebssituation angepaßte Steuerung der Bilddarstellung vorgesehen werden. Insbesondere kann dadurch eine lediglich der Unterhaltung dienende Bilddarstellung ausschließlich auf den Beifahrer beschränkt werden. Der Fahrer kann hingegen während der Fahrt beispielsweise eine Abbildung einer Straßenkarte ablesen. Während des Stillstandes des Fahrzeuges kann auch der Fahrer eine beliebige Auswahl der gewünschten Bilddarstellung, z.B. manuell, vornehmen.

Das optische Element könnte hierzu beispielsweise ein Spiegelkörper sein. Besonders vorteilhaft ist jedoch eine Ausführungsform der Erfindung, bei der das Display zur Darstellung der beiden voneinander unabhängigen Abbildungen in getrennten Liniengruppen ausgeführt ist und das optische Element ein Zylinderlinsenraster aufweist.

Durch die Aufteilung der jeweiligen Abbildung in einzelne Liniengruppen wird eine kompakte Bauform erreicht, bei der für den Beifahrer und den Fahrer in der gemeinsamen Darstellungsebene gleichzeitig unterschiedliche Abbildungen sichtbar sind. Dabei ist für jeden Betrachter jeweils die volle Darstellungsfläche erkennbar.

Man könnte sich vorstellen, die Liniengruppen unter einem Winkel zueinander und/oder ineinander verflochten auszubilden. Entsprechend einer anderen vorteilhaften Weiterbildung der Erfindung sind jedoch die Liniengruppen parallel zueinander angeordnet, und das Zylinderlinsenraster ist parallel zu den Liniengruppen angeordnet.

Auf diese Weise wird eine besonders scharfe und gut ablesbare Darstellung der unabhängigen Abbildungen erreicht. Ist der Abstand der Darstellungen der einzelnen Linien der Liniengruppen geringer als das Auflösungsvermögen des menschlichen Auges, so nimmt der Betrachter ein einheitliches, geschlossenes Bild wahr.

Von besonderem Vorteil ist es auch, wenn jeweils einer Linse des Zylinderlinsenrasters jeweils eine Linie der unabhängigen Abbildungen zugeordnet ist, so daß sich eine besonders scharfe und klare Trennung der Darstellungen der unabhängigen Abbildungen ergibt.

Beispielsweise bei einem transmissiv beleuchtbaren Display wäre es denkbar, das optische Element hinter dem Display, zwischen einer Beleuchtungseinrichtung und dem Display zu plazieren. Besonders gute optische Eigenschaften der Anzeigeeinheit und eine außergewöhnlich deutliche Trennung des ersten und des zweiten Blickwinkelbereichs liegen hingegen dann vor, wenn gemäß einer anderen vorteilhaften Weiterbildung der Erfindung das optische Element vor dem Display, d.h. zwischen Display und Betrachter, angeordnet ist.

Eine besonders günstige Weiterbildung der Erfindung ist dann gegeben, wenn während des Betriebes des Fahrzeuges aus einem ersten, einem Fahrer des Kraftfahrzeuges zugeneigten Blickwinkelbereich lediglich eine den Betriebszustand oder die Fahrsicherheit des Kraftfahrzeuges betreffende Abbildung ablesbar ist. Hierdurch werden lediglich solche Informationen für den Fahrer sichtbar abgebildet, die für ihn wesentlich sind, so daß eine unnötige Ablenkung vermieden wird. Beispielsweise können hierzu Daten der Fahrzeugsteuerung bzgl. des Bremssystems, der Meßwerterfassung, wie insbesondere die Geschwindigkeit oder der Radschlupf, erfaßt und entsprechend aufbereitet dargestellt werden. Dabei sind sowohl alphanumerische als auch graphische Abbildungen möglich, die beispielsweise auch lediglich vorübergehend ablesbar sein können.

Eine günstige Weiterbildung der Erfindung ist auch dadurch gegeben, daß die Anzeigeeinheit in Richtung eines Betrachters gegenüber der Horizontalen geneigt ist. Hierdurch wird eine Anordnung der Anzeigeeinheit in der Armaturentafel oder einer Mittelkonsole möglich, so daß der Fahrer seinen Blick nur kurzzeitig vom Verkehrsgeschehen abwenden muß. Weiterhin können störende Reflexionen vermindert und so die Ablesegenauigkeit verbessert werden.

Vorteilhaft ist es auch, wenn die Anzeigeeinheit aus zumindest einem der beiden Blickwinkelbereiche zur wahlweisen Ansicht einer der beiden Abbildungen ausgeführt ist. Hierdurch ist insbesondere für den Beifahrer auch eine Einstellung möglich, bei der aus beiden Blickwinkeln eine übereinstimmende Abbildung sichtbar ist. Dadurch kann der Beifahrer die durch die Anzeigeeinheit dargestellten Informationen für den Fahrer verfolgen und kann so beispielsweise den Fahrer besser unterstützen.

Grundsätzlich ist als Display ein beliebiges elektrooptisches Display, wie u.a. z.B. ein Flüssigkristall-Display (LCD), Vakuumfluoreszenz-Display (VFD), Elektrolumineszenz-Display oder eine Kathodenstrahlröhre (CRT), verwendbar.

Weitere Ausführungsformen der Anzeigeeinheit, die beispielsweise auch dialogfähig sein können, sind ebenso denkbar wie eine Anordnung der Anzeige im Dachbereich des Fahrzeuges oder eine Einspiegelung in die Frontscheibe des Fahrzeuges. Die Anlage kann ferner auch bei der Fahrschulung oder bei Einsatzfahrzeugen der Polizei oder Feuerwehr verwendet werden.

Die Erfindung läßt verschiedene Ausführungsformen zu. Zur weiteren Verdeutlichung ihres Grundprinzips ist eine davon in der Zeichnung dargestellt und wird nachfolgend beschrieben. Diese zeigt in
- Figur 1: eine perspektivische Prinzip-Darstellung einer erfindungsgemäßen Anzeigeeinheit,
- Figur 2: eine Draufsicht auf die Anzeigeeinheit in einer vergrößerten Darstellung.

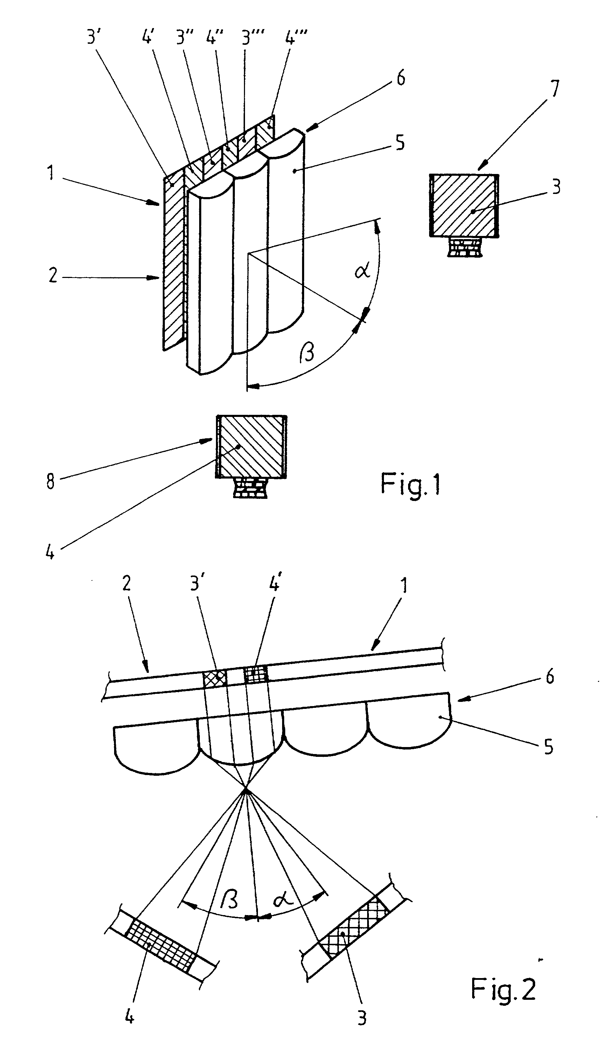

Figur 1 zeigt den Aufbau einer Anzeigeeinheit 1 für ein nicht dargestelltes Kraftfahrzeug in einer perspektivischen Prinzipdarstellung. Auf einem Display 2 der Anzeigeeinheit 1 sind jeweils in zwei abwechselnden, nebeneinander angeordneten Liniengruppen 3', 3", 3"', 4', 4", 4"' zwei Abbildungen 3, 4 dargestellt. Das Licht der Abbildungen 3, 4 fällt anschließend durch ein Zylinderlinsenraster 5 eines optischen Elementes 6 und tritt an einer einem möglichen Betrachter zugewandten Seite aus. Welche der beiden Abbildungen 3, 4 für den jeweiligen Betrachter sichtbar ist, wird durch den Blickwinkelbereich α, β festgelegt. Für einen ersten Betrachter, beispielsweise den Fahrer des Kraftfahrzeuges, ist daher ausschließlich die Abbildung 3 sichtbar, wie dies anhand der sich ihm bietenden Ansicht 7 der Anzeigeeinheit 1 verdeutlicht ist. Demgegenüber ist für den zweiten Betrachter, beispielsweise den Beifahrer, lediglich die Abbildung 4 in einer Ansicht 8 der Anzeigeeinheit 1 erkennbar, die zur Verdeutlichung ebenfalls dargestellt ist.

Figur 2 verdeutlicht den optischen Strahlengang der Anzeigeeinheit 1. Dabei fällt das Licht der Abbildungen 3, 4 durch das optische Element 6 und dessen Zylinderlinsenraster 5 hindurch und tritt an der einem Betrachter zugewandten Seite aus. Durch den Blickwinkelbereich α, β eines jeweiligen Betrachters ist zugleich festgelegt, welche der beiden Abbildungen 3 oder 4 sichtbar ist. Die beiden Abbildungen 3, 4 werden auf dem Display 2 voneinander vollkommen unabhängig in Liniengruppen 3', 4' dargestellt, so daß sich mittels einer nicht dargestellten Steuereinheit eine bedarfsgerechte Bereitstellung der jeweils vom Fahrer oder seinem Beifahrer gewünschten Abbildung 3, 4 erreichen läßt. Insbesondere ist für den Fahrer des Kraftfahrzeuges während der Fahrt lediglich eine für ihn relevante und den Betriebszustand, die Verkehrsführung oder die Sicherheit betreffende Abbildung 3 ablesbar. Der Beifahrer erhält zugleich eine davon unabhängige Abbildung 4, wobei der Bildausschnitt beider Abbildungen 3, 4 deckungsgleich ist. Eine unnötige Ablenkung des Fahrers kann dadurch vermieden werden, während der Beifahrer zugleich eine beliebige Auswahl der gewünschten Abbildungen 3 vornehmen kann, die auf Wunsch auch mit der Abbildung 4 übereinstimmen können. Eine Handbetätigung des Fahrers ist hierzu nicht erforderlich.

## Patentansprüche

1. Zur Verwendung in einem Kraftfahrzeug vorgesehene Anzeigeeinheit mit einem einzigen Display, wobei eine Abbildung auf dem Display nur aus einem Blickwinkelbereich sichtbar ist, **dadurch gekennzeichnet, daß** mittels des einzigen Displays (2) zwei voneinander unabhängige Abbildungen (3, 4) darstellbar sind, wobei mittels eines optischen Elementes (6) die erste Abbildung (3) nur aus dem ersten Blickwinkelbereich (α) und die zweite Abbildung (4) nur aus einem zweiten Blickwinkelbereich (β) sichtbar ist.

2. Anzeigeeinheit nach Anspruch 1, **dadurch gekennzeichnet, daß** das Display (2) zur Darstellung der beiden voneinander unabhängigen Abbildungen (3, 4) in getrennten Liniengruppen (3', 3", 3"', 4', 4", 4"') ausgeführt ist und das optische Element (6) ein Zylinderlinsenraster (5) aufweist.

3. Anzeigeeinheit nach Anspruch 2, **dadurch gekennzeichnet, daß** die Liniengruppen (3', 3", 3"', 4', 4", 4"') parallel zueinander angeordnet sind und daß das Zylinderlinsenraster (5) parallel zu den Liniengruppen (3', 3", 3"', 4', 4", 4"') angeordnet ist.

4. Anzeigeeinheit nach Anspruch 2 oder 3, **dadurch gekennzeichnet, daß** jeweils einer Linse des Zylinderlinsenrasters (5) jeweils eine Linie (3', 4') der unabhängigen Abbildungen (3, 4) zugeordnet ist.

5. Anzeigeeinheit nach einem der vorhergehenden Ansprüche, **dadurch gekennzeichnet, daß** das optische Element (6) vor dem Display (2) angeordnet ist.

6. Anzeigeeinheit nach einem der vorhergehenden Ansprüche, **dadurch gekennzeichnet, daß** während des Betriebes des Fahrzeuges aus einem ersten, einem Fahrer des Kraftfahrzeuges zugeneigten Blickwinkelbereich (α) lediglich eine den Betriebszustand oder die Fahrsicherheit des Kraftfahrzeuges betreffende Abbildung (3) ablesbar ist.

7. Anzeigeeinheit nach einem der vorhergehenden Ansprüche, **dadurch gekennzeichnet, daß** die Anzeigeeinheit (1) in Richtung eines Betrachters gegenüber der Horizontalen geneigt ist.

8. Anzeigeeinheit nach einem der vorhergehenden Ansprüche, **dadurch gekennzeichnet, daß** die Anzeigeeinheit (1) aus zumindest einem der beiden Blickwinkelbereiche (α, β) zur wahlweisen Ansicht einer der beiden Abbildungen (3, 4) ausgeführt ist.

## Claims

1. Display unit which is provided for use in a motor vehicle and has a single display, an image being visible on the display only from a certain range of viewing angles, **characterized in that** two images (3, 4) which are independent of one another can be represented by means of the single display (2), the first image (3) being visible only from the first range (α) of viewing angles, and the second image (4) being visible only from a second range (β) of viewing angles, by means of an optical element (6).

2. Display unit according to Claim 1, **characterized in that** the display (2) is designed to represent the two images (3, 4), which are independent of one another, in separate line groups (3', 3'', 3''', 4', 4'', 4'''), and the optical element (6) has a cylindrical lens array (5).

3. Display unit according to Claim 2, **characterized in that** the line groups (3', 3'', 3''', 4', 4'', 4''') are arranged in parallel with one another, and **in that** the cylindrical lens array (5) is arranged in parallel with the line groups (3', 3'', 3''', 4', 4'', 4''').

4. Display unit according to Claim 2 or 3, **characterized in that** in each case one lens of the cylindrical lens array (5) is assigned one line (3', 4') of the independent images (3, 4).

5. Display unit according to one of the preceding claims, **characterized in that** the optical element (6) is arranged in front of the display (2).

6. Display unit according to one of the preceding claims, **characterized in that**, while the vehicle is operating, only one image (3) which relates to the operating state or the driving safety of the vehicle can be read from the first range (α) of viewing angles inclined towards a driver of the motor vehicle.

7. Display unit according to one of the preceding claims, **characterized in that** the display unit (1) is inclined with respect to the horizontal in the direction of a viewer.

8. Display unit according to one of the preceding claims, **characterized in that** the display unit (1) is formed from at least one of the two ranges (α, β) of viewing angles for the optional viewing of one of the two images (3, 4).

## Revendications

1. Unité d'affichage destinée à être utilisée dans un véhicule automobile, comprenant un écran unique, une image affichée sur l'écran n'étant visible qu'à partir d'un angle visuel donné, **caractérisée en ce qu'**il est possible de visualiser, au moyen de l'écran unique (2), deux images (3, 4) indépendantes l'une de l'autre, la première image (3) n'étant visible qu'à partir du premier angle visuel (α) et la deuxième image (4) qu'à partir d'un deuxième angle visuel (β), et ce au moyen d'un élément optique (6).

2. Unité d'affichage selon la revendication 1, **caractérisée en ce que** l'écran (2) permettant la visualisation des deux images (3, 4) indépendantes l'une de l'autre est réalisé sous la forme de groupes de lignes séparés (3', 3", 3"', 4', 4", 4"') et **en ce que** l'élément optique (6) présente un réseau de lentilles cylindriques (5).

3. Unité d'affichage selon la revendication 2, **caractérisée en ce que** les groupes de lignes (3', 3", 3"', 4', 4", 4"') sont disposés parallèlement les uns par rapport aux autres et **en ce que** le réseau de lentilles cylindriques (5) est disposé parallèlement aux groupes de lignes (3', 3", 3"', 4', 4", 4"').

4. Unité d'affichage selon la revendication 2 ou 3, **caractérisée en ce qu'**à chaque lentille du réseau de lentilles cylindriques (5) est attribuée respectivement une ligne (3', 4') des images indépendantes (3, 4).

5. Unité d'affichage selon l'une des revendications précédentes, **caractérisée en ce que** l'élément optique (6) est disposé devant l'écran (2).

6. Unité d'affichage selon l'une des revendications précédentes, **caractérisée en ce que**, pendant le fonctionnement du véhicule automobile, seule une image (3) concernant l'état de fonctionnement ou la sécurité de conduite du véhicule automobile peut être visualisée à partir d'un premier angle visuel (α), orienté vers le conducteur du véhicule automobile.

7. Unité d'affichage selon l'une des revendications précédentes, **caractérisée en ce que** l'unité d'affichage (1) est inclinée par rapport à l'horizontale en direction d'un observateur.

8. Unité d'affichage selon l'une des revendications précédentes, **caractérisée en ce que** l'unité d'affichage (1) est réalisée de manière à permettre, au moins à partir d'un des deux angles visuels (α, β), de visualiser au choix l'une ou l'autre des deux images (3, 4).
